# EUROPEAN PATENT SPECIFICATION

(11) **EP 3 679 247 B1**
(45) Date of publication and mention of the grant of the patent: **21.06.2023**
(21) Application number: 18769961.6
(22) Date of filing: 07.09.2018
(51) Int. Cl.: F03D 17/00, F03D 80/50

(54) **METHOD FOR ANALYSIS OF SENSOR DATA RELATED TO A WIND TURBINE**
VERFAHREN ZUR ANALYSE VON SENSORDATEN IN ZUSAMMENHANG MIT EINER WINDTURBINE
PROCÉDÉ D'ANALYSE DE DONNÉES DE CAPTEUR RELATIVES À UNE ÉOLIENNE

(30) Priority: 08.09.2017 EP 17190208
(43) Date of publication of application: 15.07.2020
(73) Proprietor: Sulzer & Schmid Laboratories AG, 8618 Oetwil am See (CH)
(72) Inventor: SULZER, Thomas, 8618 Oetwil am See (CH); ASIKAINEN, Joonas, 8618 Oetwil am See (CH)
(74) Representative: Frei Patent Attorneys
(86) International application number: PCT/EP2018/074105
(87) International publication number: WO 2019/048597

(56) References cited:
- WO-A1-2017/050893
- DE-A1-102011 017 564
- DE-A1-102013 113 326
- DE-U1-202015 102 791
- US-A1- 2013 114 878

## Description

The invention relates to the field of plant inspection, and in particular to a method for analysing sensor data related to a wind turbine.

The wind-energy sector is in need of new inspection methods that can capture and document the condition of power plants, i.e. turbines, over time. Turbine blades typically are made of fibre-reinforced composites, with resins such as polyester and epoxy, and with glass and carbon fibres as the reinforcing material. Defects of the blades can be caused by the impact of objects, lightning, erosion by rain and hail, mechanical stress and flexing, aging, etc. Owners and operators should obtain full transparency with respect to the health of their assets. The detailed knowledge about defects and their propagation over time is the most important prerequisite for preventive maintenance and repair, which are known to unlock great cost savings. In addition, it facilitates compliance with legislation and with requirements by insurance companies. For this reason, rotor blades and wind-turbine towers have to be inspected periodically.

Such inspections are carried out manually by rope access teams. Highly trained inspection climbers visually identify defects over a blade surface of up to 500m² and record anomalies with handheld cameras. Current issues with traditional rope access inspection include: an aging plant population, requiring frequent inspections, increasing size of the turbines, with blades longer than 60 meters and towers higher than 100 meters, the inspection quality depends on the subjective judgement of the climbers, adverse weather conditions may limit the inspector's performance, damages can be detected by the rope team but full coverage and seamless digital documentation of the blade's health cannot be assured, reports are created mostly manually.

Assuming that a set of images of a turbine blade can be obtained in a systematic fashion, the problem remains to systematically analyse these images and extract technically meaningful information in reliable manner. Preferably, this process should be automated to a large degree.

DE 20 2015 102 791 U1 and DE 10 2011 017 564 A1 show images obtained by flying along a surface with a UAV being combined by stitching them together in two dimensions, forming a single composite image. The relation between the images is determined by information on the UAV's position when the images were taken. Stitching can degrade the quality of the images in overlapping regions.

It is therefore an object of the invention to create a method for analysis of sensor data related to a wind turbine of the type mentioned initially, which overcomes the disadvantages mentioned above.

These objects are achieved by a method for analysis of sensor data related to a wind turbine according to the claims.

The method for analysis of sensor data related to a wind turbine comprises the steps of
- retrieving (from storage) a plurality of sets of enhanced sensor data, each comprising sensor data stored in association with sensor pose data that defines the pose of a sensor at the time at which the sensor data was acquired;
- processing the plurality of sets of sensor data in combination with the sensor pose data, thereby generating an integrated view on the sets of the enhanced sensor data.

The enhanced sensor data can be the result of an inspection mission which comprises an inspection pattern with settings or reference data for a UAV, for inspection sensors (such as a camera) and for sensors for navigation, and which defines positions of the UAV at which sensor readings (such as images) are to be taken, and/or areas or points to be inspected or photographed. positions of the UAV at which sensor readings (such as images) are to be taken, and/or areas or points to be inspected or photographed.

The sensor data, that is, each set of sensor data, is stored in combination with sensor metadata. This combination shall be called **enhanced sensor data.** The sensor data can in particular be image data. The sensor metadata can in particular comprise sensor pose data. Pose data describes the pose of an object in 3D space, that is the combination of its *position* and *orientation.* Further sensor metadata can describe parameters of the inspection sensor related to the captured sensor data. For example, if the sensor is a camera, the sensor metadata can be exposure time, focus settings, etc.

In embodiments, storing each set of sensor data in association with sensor pose data comprises the steps of, during an inspection mission:
- storing each set of sensor data - for example, an image - with a timestamp;
- storing, at each point in time that an image is captured, the sensor pose data with a timestamp.

Any further metadata can be stored in the same manner. The different data can be stored in association with a mission identifier that uniquely identifies the inspection mission and permits to link the data to mission data that characterises the mission as a whole, such as an identity of the turbine, a model type of the turbine, its geographic location, its owner or operator, etc...

The reference flight path can be in terms of the trajectory and pose of the UAV or the trajectory and pose of the inspection sensor. The two are related by their relative position and the gimbal angles.

In embodiments, the sensor is a camera and the sensor data is image data, and the step of
- processing the plurality of sets of sensor data in combination with the sensor pose data, thereby generating an integrated view on the sets of the enhanced sensor data comprises the step of
- displaying, on a display device, one or more images defined by the image data, and at least one of the following steps
- displaying for each of the images displayed, associated sensor pose data;
- displaying at least two images ordered according their associated sensor pose data.

In this manner, an image browser can be provided which allows for an integrated view of a plurality of images of the blade, in a manner that corresponds to the physical configuration of the inspection sensor or camera relative to the blade at the instant that the images were taken.

In embodiments, the step of
- displaying at least two images ordered according their associated sensor pose data;
comprises at least one of the steps of
- displaying at least two images in a horizontal row, the relative position of the images in the row being according to a relative horizontal position comprised in the respective sensor pose data associated with each image, wherein the images in the same horizontal row are associated with the same vertical position comprised in the respective sensor pose data;
- displaying at least two image in a vertical column, the relative position of the images in the column being according to a relative vertical position comprised in the respective sensor pose data associated with each image; wherein the images in the same vertical column are associated with the same horizontal position comprised in the respective sensor pose data.

It is understood, that images being "associated with the same vertical position" does not necessarily mean that the vertical positions are exactly the same, but can differ to a certain degree. Or it can mean that a vertical position comprised in the respective sensor pose data lies within a band of vertical positions of a given width. Thereby, it is possible to display views of the same blade taken at different horizontal positions around the blade and at least approximately at the same height in an integrated view, allowing a user to view part or the entire circumference of the blade along a chord line in an intuitively appealing manner in the horizontal sequence. The same holds, mutatis mutandis, for images "associated with the same horizontal position" at different heights along the span of the blade. Here the band of horizontal positions considered to encompass "the same" can be inclined, that is, not vertical, if the blade is also inclined in a projection a seen in the sequence of images.

In embodiments, the images associated with the same horizontal position are captured as a sequence of images as the UAV follows an essentially vertical section of its flight path.

In embodiments, the method comprises the step of displaying at least two images in a vertical column, and scrolling, according to a user input, the column in a vertical direction on the display device.

In embodiments, the method comprises the steps of
- displaying a magnified section of a first image of the at least two images in the vertical column, the magnified section showing part of the first image at a horizontal position and with a level of magnification, and
- scrolling, according to a user input, the magnified section,
- thereby, when the magnified section reaches an upper or lower boundary of the first image, changing the display to show a magnified section of an adjacent second image with the same level of magnification and located at the same horizontal position within the second image.

The horizontal position can be chosen to be the same in image coordinates. Alternatively, it can be chosen to be the same horizontal position on the blade, e.g. in a coordinate system of the blade (or "blade coordinates"), wherein the horizontal position can be defined and measured along the chord lines.

This allows to scroll the magnified section through a sequence of vertically arranged images, thereby presenting a quasi-continuous magnified view of portions of the blade.

In embodiments, the method comprises the steps of
- inputting a user selection specifying a selected linear feature of the blade;
- displaying a magnified section of a first image showing a portion of the selected linear feature;
- inputting a scroll command, and in response to the scroll command, moving the magnified section to follow the selected linear feature.

The selected linear feature can be, for example, the leading edge or trailing edge, a seam line or a weld line on the surface of the blade. Given the computer model of the blade, which also comprises such linear features, and since the images can be mapped onto the model, the position of a feature in the model can be projected back into the images and used to select the portion of the image to be displayed in the magnified section.

In embodiments, the sensor is a camera and the sensor data is image data, and the step of
- processing the plurality of sets of sensor data in combination with the sensor pose data, thereby generating an integrated view on the sets of the enhanced sensor data comprises the steps of
- identifying, in images represented by the image data, one or more deviations on the blade;
- automatically determining, for each of the one or more deviations, a deviation location defining a location of the deviation on the blade;
- storing, for each of the one or more deviations, the deviation location as part of deviation data associated with the deviation.

The term "deviation" represents changes to the surface of a blade 3 that deviate from a normal or original state of the surface. Typically, a deviation is a defect, or a patch caused by repairing a defect. Generally speaking, deviations are caused by events that change the state of the surface. Such events can be damage events or repair or maintenance events.

Deviation data is a set of information describing a deviation. It can comprise one or more deviation images, a deviation categorization and a deviation location. A deviation image is a sub-image cut from an image along a bounding line, typically a bounding box. The deviation categorization comprises a type, severity, etc. of the deviation. It can also comprise an action recommendation, indicating a type of action for repairing a defect. The different data comprised by deviation data regarding a particular deviation or defect can be stored in association with a unique deviation identifier.

The deviation location generally corresponds to the location of the deviation in 3D space. It can be can expressed in terms of a 3D reference system external to the blade, or one fixed to the blade, or in terms of a two-dimensional blade coordinate system on the surface of the blade. Therein, for example, one coordinate can give the position as measured from the root of the blade, the other the position on a chord line, measured from one of the edges

In embodiments, the method comprises (for identifying deviations on the blade) the steps of
- presenting an image to a user;
- inputting a user input that specifies a deviation image that shows the deviation within the image, in particular wherein the user input specifies a bounding line, in particular a bounding box, delineating the deviation image from the remainder of the image;
- storing the deviation image as part of deviation data associated with the deviation; and optionally comprises (for determining a deviation location) the steps of
- computing the deviation location on the blade by determining, based on the bounding line, a location of the deviation image within the image, and projecting this location onto a computer model of the blade;
- storing the deviation location as part of deviation data associated with the deviation.

The user input can be inputted by means of a pointing device such as a computer mouse, and by drawing the bounding line or a bounding box at least approximately comprising the deviation image.

The bounding line can be determined automatically from a single point of the deviation image. This point can be selected by the user or can be determined automatically. The bounding line or box can be determined automatically, for example, by using a standard box size or by determining an image patch around the selected point that shares image properties such as colour and/or structure with the selected point.

If the user selects a single point, then this can be used as the location of the deviation image within the image.

This (determining a deviation location) can be done given the sensor pose data associated with the image and the 3D computer model of the blade. The sensor pose data allows to determine the relative position of the camera to the real blade at the time that the image was taken. The geometry of the camera is known, and can depend on settings of the camera, such as zoom and focus settings, which are part of the sensor metadata. This information allows to project, within the 3D computer model, a point in the image coordinate system back onto the 3D model of the blade and thereby determine the position on the blade.

The location of the deviation image within the image can be determined from the bounding line, for example, as the centre of gravity of the image section determined by the bounding line.

In embodiments, the method comprises (for identifying deviations on the blade) the steps of
- performing a computer-implemented analysis of an image to identify one or more deviation images showing deviations within the image;
- storing the deviation image as part of deviation data associated with the deviation; and optionally comprises (for determining a deviation location) the step of
- computing the deviation location on the blade by automatically determining a location of the deviation image within the image and projecting this location onto a computer model of the blade;
- storing the deviation location as part of deviation data associated with the deviation.

The step of automatically determining the location of the deviation image within the image can be part of the preceding computer-implemented analysis. For example, it can be an output of an analysis performed with a convolutional neural network (CNN) or another machine learning method. Alternatively, it can be determined by the steps of
- automatically determining a bounding line, in particular a bounding box, delineating the deviation image from the remainder of the image, and
- automatically determining, from the bounding line, the location of the deviation image within the image.

In embodiments, the method comprises the steps of
- automatically or manually determining, for each of the one or more deviations, a deviation categorization defining one or more properties of the deviation, comprising at least one of
   ∘ a type of the deviation,
   ∘ a severity of the deviation,
   ∘ an action recommendation for treating the deviation; and
- storing the deviation categorization as part of deviation data associated with the deviation.

A deviation categorization comprises properties of the deviation. Further elements of a deviation categorization can comprise other deviation properties such as a size of the deviation. This can be expressed in blade coordinates. It can comprise a maximum elongation in each of the two coordinate directions.

In embodiments, automatically determining the deviation categorization comprises the use of a classification method derived by supervised machine learning.

Methods for image classification based on training data can be applied. A training set of deviation images with associated deviation categorizations that were established manually can be used to train a classification algorithm that will perform the automatic classification based on fresh deviation images. Such algorithms can use, for example, convolutional neural networks (CNN).

In embodiments, the classification method can use as input, in addition to a deviation image, the associated deviation location. This allows to take into account the fact that certain defects are more likely to appear at certain locations on the blade. This can improve the efficiency and the quality of the classification. For example, defects due to lightning are more likely to occur near the tip, erosion is more likely to occur on the leading edge, cracks are more likely to occur at locations of high stress (which can be found by FEM simulation of the blade under load), etc.

In embodiments, the method comprises the steps of
- for two or more sets of deviation data (representing deviations that have been identified and located) representing deviations identified in different images, comparing their deviation locations on the blade, and,
- if the locations are the same, storing an association between the two sets of deviation data to represent the fact that they pertain to the same physical deviation.

In this manner, deviation images extracted from different images are matched, showing the same physical deviation from different viewpoints and/or at different points in time. The comparing of the deviation location can be done automatically. The different viewpoints typically correspond to images or generally enhanced sensor data captured during the same inspection mission inspecting a single blade. The different points in time typically correspond to separate inspection missions inspecting the same blade at different times, e.g., months or years apart.

In embodiments, the method comprises the step of
- outputting, in human readable form, a report concerning at least one blade or the set of blades of a turbine, the report comprising: a list of deviations, and for each deviation at least
   o a deviation image,
   o a deviation categorization and a
   o deviation location, and
   ∘ optionally more than one deviation image if there exists more than one deviation image for the same physical deviation.

Based on such reports, a turbine operator can demonstrate compliance with legal and insurance companies' requirements. Generally, technical requirements can be specified to ensure safe and efficient operation of the turbine. Showing that a turbine or blade satisfies the requirements can help to extend the lifetime of the blade and/or the turbine.

In embodiments, the method comprises the steps of
- maintaining a database that comprises, for at least one blade, deviation data, and in particular also enhanced sensor data, from a plurality of inspection missions, wherein associations between sets of deviation data from different inspections are present, representing the fact that they pertain to the same physical deviation observed at different points in time;
- optionally performing an analysis of a progression over time of defects represented by the deviation data from a plurality of inspection missions over a plurality of turbines, thereby determining a statistical model of defect progression, and using this statistical model to predict, for a selected blade, defect progression and optionally plan maintenance actions on the blade.

Such sets of deviation data from different inspections but pertaining to the same physical deviation can be called deviation history data. For a deviation that represents a defect that has not been repaired, it can also be called defect history data.

Deviation history data can be augmented by information about repairs having taken place. Such information can be added manually. As a result, the deviation history data covers, for each deviation, its initial evolution as a defect, then a maintenance action such as repairing the defect, and then the further evolution of the repaired deviation, all at the same location on the blade.

In embodiments, images from at least one earlier inspection mission are used in performing a computer-implemented analysis of an image to identify one or more deviation images, by comparing an image to an image of the same location on the blade from an earlier inspection mission. This makes it possible to identify deviations based on a difference in images, and/or to identify changes to a deviation over time. In embodiments, from the deviation history data and in particular defect history data from a plurality of inspection missions over a plurality of turbines having comparable types of blades, an analysis of defect progression over time is performed. For example, a statistical model of the evolution of deviation properties as comprised in the deviation categorization can be automatically derived. This corresponds to a model of defect progression for the type of blades considered. From such a model of defect progression, prediction of defect progression can be performed and maintenance can be planned. Based on this, maintenance actions can be performed. Depending on the type and severity of all the defects on a blade, maintenance can involve local repairs or a general overhauling or replacement of the blade.

According to the invention, the step of
- displaying at least two images ordered according to their associated sensor pose data;
comprises the steps of
- determining a probability of occurrences of deviations within images of a sequence of images;
- automatically displaying the sequence of images; and
- automatically modifying, according to this probability, at least one parameter that controls the displaying of the sequence of images.

The sequence of images thus comprises images that are to be displayed, and the manner of displaying them is automatically adapted according to an expected number of deviations This probability of occurrences can be considered as a probability distribution over the area of the blade.

As a result, is becomes possible for a human expert reviewing the images to automatically and rapidly move over areas where no or few deviations are expected, and to focus and concentrate on areas where more deviations are expected.

The probability of occurrences of deviations can also be expressed as an expected density of deviations or defects. For example, this can be a number of expected deviations or defects per image or per unit area within the image. In the former, the density is a scalar value associated with the image. In the latter, the density has, for different locations in the image, separate values. These values can be represented by a density map associated with the image. The density maps of the images, in combination, correspond to a density map covering the area of the blade.

The images being displayed can be the original images or image data, or (processed) images generated by processing the former. Processing the images can involve an adaptation of colour and brightness parameters, and/or combining images by stitching and/or blending them together, or by switching from one image to the next as the virtual camera moves along its flight path. Alternatively or in addition, processing the images can involve a superposition of the images with associated density maps representing the probability of occurrences of deviations within the associated images, for example by a colouring or modification of the images according to the density. In such cases, the virtual flight path can be expressed in a coordinate system related to a plane in which the images lie.

Alternatively or in addition, processing the images can involve generating a virtual view by mapping or projecting images on the computer model of the blade and rendering a view of the blade as seen from a virtual camera. In such cases, the virtual flight path can be expressed in a 3D coordinate system of the computer model of the blade.

In embodiments, one or more parameters that control the displaying of the sequence of images are from the set of:
- a rate of change in the display of the sequence of images;
- a magnification of the images;
- a selection of image sections.

Thus, a flight path of a virtual camera - using the original or processed images - can be determined according to the probability of occurrences of deviations, by adapting its parameters, such as speed, distance from the blade (or magnification or zoom factor) and/or direction of view. The distance from the blade, or magnification or zoom factor, correspond to the size of an area represented by an image.

In embodiments, the flight path is generated from a reference flight path. The reference flight path can be generated from a statistical analysis of defect data across multiple wind turbines and blades of the same type, using defect annotations from human experts. The reference flight path can be adapted by modifying virtual camera flight parameters, such as zoom level and viewing direction according to the probability of occurrences of deviations.

In embodiments, the flight path can be generated by first determining a set of areas with a relatively high expected density of deviations or defects ("hotspots"), then determining a path that covers all these areas (known algorithms for the travelling salesman problem can be used for this). Then, virtual camera flight parameters can be adapted as described above. As explained below, the expected density of deviations or probability of occurrences of deviations can be determined from the images by means of a machine learning system.

In addition, the probability of occurrence of deviations in the image being displayed can be signalled to the user. This can be done by optical, acoustical, haptic (vibration) means, etc. Optical means can involve a display element on the display device, such as changing a colour of an area of the screen, changing a position of an indicator element along a scale, etc.

Furthermore, the image browser software can display one or more of the following data: altitude or vertical position at which image is located, camera ISO, aperture and exposure settings, and/or the focus distance. For each defect or deviation, the location on the blade, e.g. expressed as distance from the blade root and from the leading edge, can also be displayed.

In embodiments, the steps are performed of.
- accepting a user input;
- in accordance with the user input, performing one of stopping, modifying the speed of change or rewinding the displaying of the sequence of images.

This makes it possible, for example, the user viewing the sequence of images to do so without constant interaction with the system - as would be the case if the user had to control a scrolling action or the movement of a virtual camera - and to stop or pause the displaying when noticing a deviation.

In embodiments, the step of
- determining a probability of occurrences of deviations within images of a sequence of images that are to be displayed;
comprises the steps of
- inputting an image and/or position data associated with the image of the sequence of images into a machine learning system that is trained to associate an image and/or position data associated with the image with a probability of occurrences of deviations within the image, and retrieving the probability of occurrences of deviations from the machine learning system.

The probability of occurrences of deviations within the image can be expressed as a set of one or more deviations, each deviation being associated with a categorization and an expected location in the image and/or on the blade. These two locations carry the same information, since one can be computed from the other. Given a set of deviations from one or more images, a corresponding density of deviations or defects in the images and/or on the blade surface can be computed.

The position data associated with the image corresponds to its position on the blade. It can be expressed by a position and size (and optionally an angular orientation) of the image in the blade coordinate system and can be computed from the sensor pose data associated with the image.

Machine learning can involve deep learning architectures such as deep neural networks, deep belief networks and recurrent neural networks.

The machine learning system can be trained depending on the nature of the data used when applying it. For example, training data can comprise images together with image position and size on the blade as input data, and deviation information, such as the probability of occurrences as output data.

In embodiments, the input data can be image position alone, without regard to image content.

In embodiments, the sensor is a distance sensor and the sensor data is distance data, and the step of
- processing the plurality of sets of sensor data in combination with the sensor pose data, thereby generating an integrated view on the sets of the enhanced sensor data is accomplished by the step of
- from multiple sets of distance measurements made by the distance sensor, combined with sensor pose data representing the pose of the distance sensor when each set of distance measurements was obtained, determining a 3D model of the turbine.

A set of distance measurements can, depending on the type of sensor, comprise a 2D depth map or a linear sequence of distance measurements from scanning distances within a plane. In each case, such a set of distance measurements is associated with the pose of the distance sensor - which in turn can be determined from the pose of the UAV and the angles of the gimbal - at the time that the measurements were taken. This information can be combined, resulting in, for each set of distance measurements, a set of points in 3D space. For a linear scanner, these points lie within a plane in 3D space. A plurality of such sets of distance measurements can give, depending on the flight path and pose of the distance sensor, points in 3D space from all parts of the turbine that are of interest. The information from these points, representing a point cloud, can be integrated in known ways to generate a 3D model from scratch, or to adapt parameters of a given 3D model.

Methods for generating 3D models from scratch, given a set of data points corresponding to a point cloud are known.

Methods for adapting parameters of a given 3D model to a point cloud can involve optimisation methods that vary the parameters of the 3D model until it achieves an optimal match with the point cloud. Optimisation methods can be deterministic or stochastic. Adapting a given model has the advantage that a priori information about the structure of the turbine is incorporated.

This solves the problem that up to date 3D models of blades and the entire turbine may not be available to the operators of the turbine. In embodiments, given an exact model of the blades, simulations of the mechanical and/or the aerodynamic behaviour properties of a turbine can be performed, and based on this, operation of the turbine can be optimised.

Furthermore, such data can be valuable in the life time assessment of the blade. Using a full 3D model, which currently is not available to the operator, enables calculation of the forces and stresses on the blade caused in operation of the turbine and can then be provided to, e.g., insurance companies when requesting extension of the operation.

In embodiments, the method comprises the following steps for acquiring sensor data related to a wind turbine, using an unmanned aerial vehicle (UAV) comprising at least one inspection sensor for acquiring the sensor data:
- determining a reference flight path for the UAV;
- operating the UAV to automatically fly along an actual flight path derived from the reference flight path,
- acquiring, as the UAV flies along one or more sections of the actual flight path, with the inspection sensor, multiple sets of sensor data,
- storing each set of sensor data in association with sensor pose data that defines the pose of the inspection sensor at the time at which the set of sensor data was acquired.

In an embodiment, a computer program for the analysis of sensor data related to a wind turbine is loadable into an internal memory of a digital computer or a computer system, and comprises computer-executable instructions to cause one or more processors of the computer or computer system execute the analysis method. In another embodiment, a computer program product comprises a computer readable medium having the computer-executable instructions recorded thereon. The computer readable medium preferably is non-transitory; that is, tangible. In still another embodiment, the computer program is embodied as a reproducible computer-readable signal, and thus can be transmitted in the form of such a signal. The executing of the method can involve the computer program interacting with a user, by means of output devices such as a display, printer, etc. and input devices such as a keyboard, pointing device, touchscreen, etc.

Further embodiments are evident from the dependent patent claims.

The subject matter of the invention will be explained in more detail in the following text with reference to exemplary embodiments which are illustrated in the attached drawings, in which:
- Figure 1: a wind turbine and a reference flight path;
- Figure 2: a UAV;
- Figure 3: enhanced sensor data captured by the UAV;
- Figure 4: enhanced sensor data displayed on a display device;
- Figure 5: elements of an image;
- Figure 6: a blade and blade coordinate system; and
- Figure 7: deviation data.

In principle, identical parts are provided with the same reference symbols in the figures.

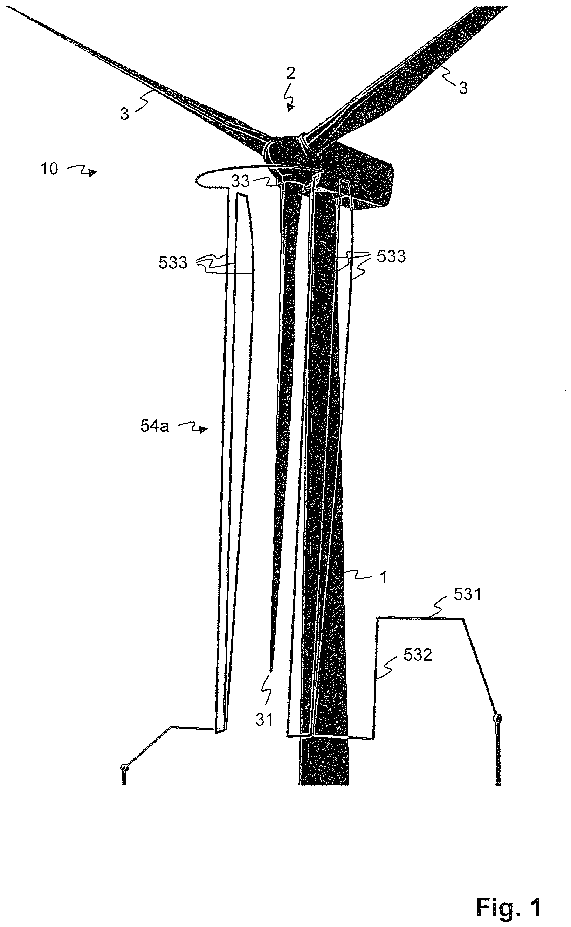

**Figure 1** schematically shows a wind turbine 10 comprising a tower 1 supporting a nacelle enclosing a drive train driving an electrical generator via a gearbox. Turbine blades 3 are arranged on a hub to form a rotor 2 driving the drive train.

Each blade 3 is typically secured at its root end 32, and then "spans" radially "outboard" to a free end or tip 31. The distance from the tip 31 to the root 32, at the opposite end of the blade 3, is called the "span." The front, or leading edge 33 of the blade 3 connects the forward-most points of the blade 3 that first contact the air. The rear, or trailing edge 34 of the blade 3 is where airflow that has been separated by the leading edge 33 re-joins after passing over a suction surface or side 35 and a pressure surface or side 36 of the blade.

A "chord line" connects the leading and trailing edges of the blade 3 in the direction of the typical airflow across the blade. The length of the chord line is called the chord. Since many blades 10 change their chord over the span, the chord length is referred to as the "root chord," near the root, and the "tip chord," near the tip of the blade. The chord lines are arranged in the "chord planes" that extend through the streamlines on the corresponding pressure and suction surfaces of the blade.

**Figure 1** also shows a reference flight path 54a. The reference flight path 54a can be generated from a generic flight path 53 by scaling it according to the actual dimensions, expressed by a set of parameters, of the turbine 10 to be inspected.

The flight path shows several sections 533 along which the UAV 4 moves along the span of the blade 3 on vertical paths, upward or downward. Each such vertical section covers the span of the blade 3, and thus images taken along one section cover one circumferential section of the blade. The vertical sections are arranged around the blade 3, and so the images 6 from all vertical sections together can provide a complete view of the surface of the blade 3.

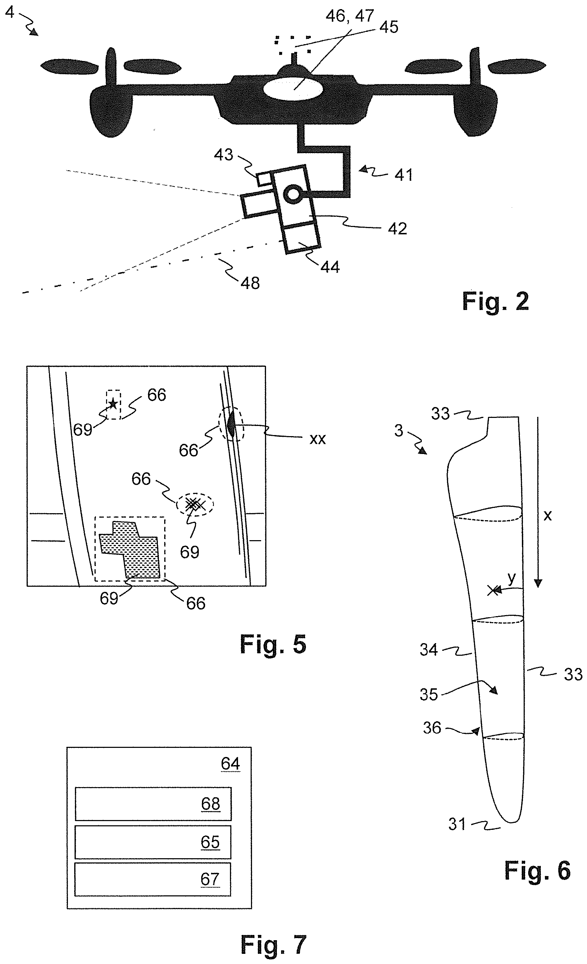

**Figure 2** schematically shows an unmanned aerial vehicle (UAV) 4, such as a multicopter, as it can be used in embodiments of the invention. It carries a inspection sensor 42 suspended by gimbal 41, rotatable about at least two or three Euler angles. The inspection sensor 42 typically is an optical camera and shall henceforth be referred to as such. However, other types of inspection sensors can be envisioned, such as devices operating in the non-optical ranges of the electromagnetic spectrum, range sensors etc. The camera 42 comprises a focus drive 43 for changing a focus setting of the camera lens.

Attached and moved with the inspection sensor (camera) 42 is a distance sensor 44. In other embodiments, the distance sensor 44 is attached to and moved with a main body of the UAV 4 and not the gimbal 41. The distance sensor 44 can be able to generate a 2D depth map or a linear sequence of distance measurements from scanning distances within a scanning plane 48. Most exemplary embodiments described herein will be based on the latter. A 2D depth map comprises 3D information in that it comprises a 2D array of data, wherein the data indicates the distance from a point (such as a sensor) or in general also from a plane.

The UAV 4 comprises a GPS 45 module and/or a further sensor 46, such as inertial sensor, gyroscope, barometer and/or compass. A flight controller 47 is arranged to integrate data from the GPS 45 and/or further sensor 46 and the distance sensor 44, and a computer model of an object to be inspected, such as a wind turbine 10, and to generate flight commands such as position or speed vectors to be executed by the UAV 4. This can be done by, at a given time and location, determining the pose of the UAV 4, comparing it to the pose according to the reference path, and calculating flight commands based on current pose, velocity and acceleration information to move the UAV to a next pose along the reference path at a future point in time. The reference path and the next pose typically includes reference speed vectors.

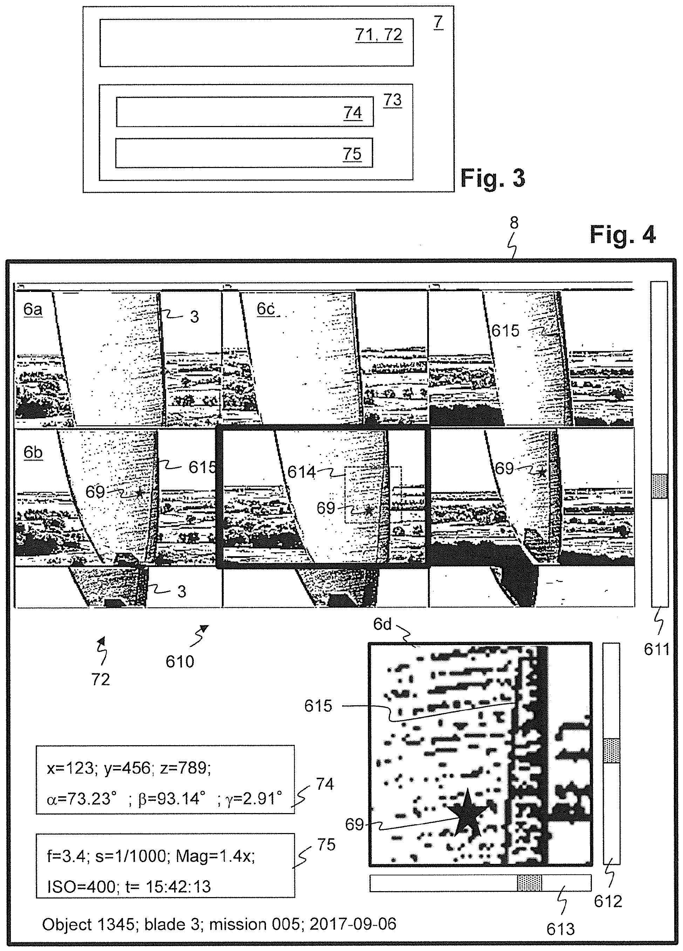

**Figure 3** illustrates a sequence of sensor data 71, in this case a sequence of images or image data 72 and its relation to other data. The image data 72 are captured at regular spatial intervals as the UAV 4 moves along the blade 3, along essentially vertical sections of the actual flight path 54b, going up or down. Each image is stored as a set of enhanced sensor data 7, comprising the sensor data 71, in this case image data 72, together with sensor metadata 73. The sensor metadata 73 comprises sensor pose data 74 representing the pose of the camera 42 when the image was captured, and further metadata 75, typically generated by the camera 42. The enhanced sensor data 7 can be associated with a mission identifier, e.g. a string of characters, that uniquely identifies the inspection mission.

For a typical inspection mission covering one blade, with a resolution of ca. five Pixels per millimetre and with 30 MPixel per image, the image data 72 can use ca. 12 GB of computer storage.

**Figure 4** shows the sequence of images 6 presented on a display device 8, arranged in a grid 610, with rows comprising images 6a, 6c taken at essentially the same height (along the span of the blade 3, assuming that the blade 3 is in a vertical position, pointing downward). Columns comprise images 6a, 6b of the same vertical section of the blade 3. In embodiments, there are one or more rows, and one or more columns. A vertical grid scroll element 611 is configured to, according to user input, scroll the one or more columns of the grid 610 vertically. In the Figure, the vertical scroll position is such that the lowermost row, showing the tip from different angles, is only partly displayed. A horizontal scroll element (not shown in the figure) can be present as well.

The images 6a, 6b, 6c show the blade 3 in front of a landscape, and on some images a deviation 69 being a defect is visible. In the present example, the deviations 69 or defects seen in the three images in the middle row all correspond to the same physical defect. In the lowermost row, the dark region corresponds to a patch created when the blade 3 was repaired.

For a user-selected image 6, indicated by a thick border, sensor pose data 74 and further sensor metadata 75 associated with the image is displayed. Further information such as sensor metadata 73 pertaining to all the images can also be shown on the display 8 in association with the images 6.

The user interface allows a user to select one of the images 6a, 6b, 6c for a magnified view, which is displayed as a magnified section 6d of the selected image. A zoom level or factor of magnification can be set by the user. The example shows a section of the image labelled 6c being magnified. The part in this "un-zoomed" image 6c that is being magnified is identified by a zoom frame 614. The magnified view comprises a vertical scroll element 612 and horizontal scroll element 613. Scrolling with these scroll elements moves the section of the image being magnified, which can be indicated by moving the zoom frame 614 within the un-zoomed image. When the zoom frame reaches the border of a first un-zoomed image, the system can be configured to move the zoom frame to an adjacent, second image in the vertical or horizontal direction, depending on which border has been reached. The zoom frame can further be positioned at a location in the adjacent, second image that shows a physical location on the blade 3 is at or nearest to the physical location shown in the magnified section 6d in the previous, first image 6c. The physical location of image points or sections in each case can be computed by projecting these points, in a 3D model of the blade 3, back onto the modelled blade surface, as explained elsewhere in the present application.

In embodiments, the zoom frame can be placed in the adjacent, second image at the same vertical or horizontal position, depending on whether a horizontal or vertical border of the images 6 was crossed, at which it was in the first image 6c.

In other embodiments, the zoom frame 614 can be made to follow a selected linear feature 615. This linear feature 615 can be defined in the 3D model. It can be a curve on the surface of the blade. Given a point on the linear feature 615, an image 6 comprising this point is automatically determined from its location in the 3D model and the image data 72 with associated sensor pose data 74, and displayed at a selected zoom level as a magnified section 6d. Operating a further scroll controller moves the point to be displayed along the linear feature 615 and updates the magnified section 6d.

Such linear features can be the leading edge 33 or trailing edge 34, or a seam line 615.

The images 6 in the middle row in the grid 610 and the magnified view 6d all show the same deviation, in this case a defect. The defect can be identified independently in each image 6, and based on the location of the defect on the blade, associated deviation data sets can be linked, indicating that they refer to the same physical defect.

**Figure 5** shows elements of an image 6, comprising a view of a blade 3, bounded by an image frame 61, with exemplary deviations 69. In the present example, three of the deviations 69 represent defects, and one represents a patch on the surface caused by repairing a former defect. Each deviation 69 is associated with a bounding line 66, which can be a bounding box, another regular form such as an ellipse, or a freeform. A bounding line 66 can be drawn by a user or determined automatically by image analysis software. For each deviation 69 a deviation image 65 showing only a part of the image 6 comprising part or all of the deviation 69 is extracted. For example, if the bounding line 66 is a bounding box, the deviation image 65 can be the part of the image 6 contained by the bounding box.

**Figure 6** shows a blade 3 and blade coordinate system. The blade coordinate system has a span coordinate x and a chord coordinate y. In the present example, the span coordinate has its origin at the root 32 of the blade 3, and the chord coordinate at the leading edge 33. Points on the suction side 35 and pressure side 36 can be distinguished in chord coordinates by assigning them positive or negative values, respectively.

**Figure 7** shows deviation data 64 comprising
- a deviation image 65, that is, image data;
- deviation categorization 67, such as
   o type, for example: Erosion, Grease or Oil, Cracking, Lightning damage, Delamination. Repaired Area
   ∘ severity, for example: Small nonconformity, Medium nonconformity, Severe nonconformity
   ∘ action recommendation, for example: No action required, Immediate repair required, Continued monitoring required, Decommissioning required; and
- deviation location 68, such as x=10135, y=250, indicating the location in millimetres in the blade coordinate system.

While the invention has been described in present embodiments, it is distinctly understood that the invention is not limited thereto, but may be otherwise variously embodied and practised within the scope of the claims.

## Claims

1. Method for analysis and display of sensor data related to a wind turbine, comprising the steps of
• retrieving a plurality of sets of enhanced sensor data (7), each comprising sensor data (71) stored in association with sensor pose data (74) that defines the pose of a sensor (42, 44) at the time at which the sensor data (71) was acquired, wherein the sensor is a camera (42) and the sensor data (71) is image data (72);
• displaying, on a display device (8), one or more images (6) defined by the image data (72);
• displaying at least two images (6) ordered according to their associated sensor pose data (74);
**characterised in that** the step of
• displaying at least two images (6) ordered according to their associated sensor pose data (74);
comprises the steps of
• determining a probability of occurrences of deviations (69) within images of a sequence of images;
• automatically displaying the sequence of images;
• automatically modifying, according to this probability, at least one parameter that controls the displaying of the sequence of images.

2. The method of claim 1, wherein the step of
• displaying at least two images (6) ordered according their associated sensor pose data (74);
comprises at least one of the steps of
• displaying at least two images (6a, 6c) in a horizontal row, the relative position of the images (6a, 6c) in the row being according to a relative horizontal position comprised in the respective sensor pose data (74) associated with each image (6a, 6c), wherein the images (6a, 6c) in the same horizontal row are associated with the same vertical position comprised in the respective sensor pose data (74);
• displaying at least two images (6a, 6b) in a vertical column, the relative position of the images (6a, 6b) in the column being according to a relative vertical position comprised in the respective sensor pose data (74) associated with each image (6a, 6b); wherein the images (6a, 6b) in the same vertical column are associated with the same horizontal position comprised in the respective sensor pose data (74).

3. The method of claim 2, comprising the step of displaying at least two images (6a, 6b) in a vertical column, and scrolling, according to a user input, the column in a vertical direction on the display device (8).

4. The method of claim 3, comprising the steps of
• displaying a magnified section (6d) of a first image (6a) of the at least two images (6a, 6b) in the vertical column, the magnified section (6d) showing part of the first image (6a) at a horizontal position and with a level of magnification, and
• scrolling, according to a user input, the magnified section,
• thereby, when the magnified section (6d) reaches an upper or lower boundary of the first image (6a), changing the display to show a magnified section (6d) of an adjacent second image (6b) with the same level of magnification and located at the same horizontal position within the second image (6b).

5. The method of one of claims 1 to 3, comprising the steps of
• inputting a user selection specifying a selected linear feature of the blade (3);
• displaying a magnified section (6d) of a first image (6a) showing a portion of the selected linear feature;
• inputting a scroll command, and in response to the scroll command, moving the magnified section (6d) to follow the selected linear feature.

6. The method of one of claims 1 to 5, wherein the sensor is a camera (42) and the sensor data (71) is image data (72), and wherein the step of
• processing the plurality of sets of sensor data (71) in combination with the sensor pose data (74), thereby generating an integrated view on the sets of the enhanced sensor data (7)
comprises the steps of
• identifying, in images (6) represented by the image data (72), one or more deviations (69) on the blade (3);
• automatically determining, for each of the one or more deviations (69), a deviation location (68) defining a location of the deviation (69) on the blade (3);
• storing, for each of the one or more deviations (69), the deviation location (68) as part of deviation data (64) associated with the deviation (69).

7. The method of claim 6, comprising the steps of
• presenting an image (6) to a user;
• inputting a user input that specifies a deviation image (65) that shows the deviation (69) within the image (6), in particular wherein the user input specifies a bounding line (66), in particular a bounding box, delineating the deviation image (65) from the remainder of the image (6);
• storing the deviation image (65) as part of deviation data associated with the deviation (69);
and optionally comprising the steps of
• computing the deviation location (68) on the blade by determining, based on the bounding line (66), a location of the deviation image (65) within the image (6) and projecting this location onto a computer model of the blade (3);
• storing the deviation location (68) as part of deviation data associated with the deviation (69).

8. The method of claim 6, comprising the steps of
• performing a computer-implemented analysis of an image (6) to identify one or more deviation images (65) showing deviations (69) within the image (6);
• storing the deviation image (65) as part of deviation data associated with the deviation (69);
and optionally comprising the step of
• computing the deviation location (68) on the blade by automatically determining a location of the deviation image (65) within the image (6) and projecting this location onto a computer model of the blade (3);
• storing the deviation location (68) as part of deviation data associated with the deviation (69).

9. The method of one of claims 6 to 8, comprising the steps of
• automatically or manually determining, for each of the one or more deviations (69), a deviation categorization (67) defining one or more properties of the deviation (69), comprising at least one of
o a type of the deviation (69),
o a severity of the deviation (69),
o an action recommendation for treating the deviation (69); and
• storing the deviation categorization (67) as part of deviation data associated with the deviation (69).

10. The method of claim 9, wherein automatically determining the deviation categorization (67) comprises the use of a classification method derived by supervised machine learning.

11. The method of one of claims 6 to 10, comprising the steps of
• for two or more sets of deviation data (64) representing deviations (69) identified in different images, comparing their deviation locations (68) on the blade (3), and,
• if the locations are the same, storing an association between the two sets of deviation data (64) to represent the fact that they pertain to the same physical deviation (69).

12. The method of one of claims 6 to 11, comprising the step of
• outputting, in human readable form, a report concerning at least one blade (3) or the set of blades (3) of a turbine (10), the report comprising: a list of deviations (69), and for each deviation (69) at least
o a deviation image (65),
o a deviation categorization (67) and a
o deviation location (68), and
∘ optionally more than one deviation image (65) if there exists more than one deviation image (65) for the same physical deviation (69).

13. The method of one of claims 6 to 11, comprising the steps of
• maintaining a database that comprises, for at least one blade (3), deviation data (64), and in particular also enhanced sensor data (7), from a plurality of inspection missions, wherein associations between sets of deviation data (64) from different inspections are present, representing the fact that they pertain to the same physical deviation (69) observed at different points in time;
• optionally performing an analysis of a progression over time of defects represented by the deviation data (64) from a plurality of inspection missions over a plurality of turbines (10), thereby determining a statistical model of defect progression, and using this statistical model to predict, for a selected blade (3), defect progression and optionally plan maintenance actions on the blade (3).

14. The method of claim 1, wherein one or more parameters that control the displaying of the sequence of images are from the set of:
• a rate of change in the display of the sequence of images;
• a magnification of the images;
• a selection of image sections.

15. The method of claim 1 or 14 comprising the steps of.
• accepting a user input;
• in accordance with the user input, performing one of stopping, modifying the speed of change or rewinding the displaying of the sequence of images.

16. The method of one of claims 13 to 15, wherein the step of
• determining a probability of occurrences of deviations (69) within images of a sequence of images that are to be displayed;
comprises the steps of
• inputting an image and/or position data associated with the image of the sequence of images into a machine learning system that is trained to associate an image and/or position data associated with the image with a probability of occurrences of deviations (69) within the image, and retrieving the probability of occurrences of deviations (69) from the machine learning system.

## Patentansprüche

1. Verfahren zur Analyse und Anzeige von Sensordaten, die sich auf eine Windkraftanlage beziehen, mit den folgenden Schritten
- Abrufen einer Vielzahl von Sätzen erweiterter Sensordaten (7), die jeweils Sensordaten (71) umfassen, die in Verbindung mit Sensorpositionsdaten (74) gespeichert sind, die die Position und Orientierung eines Sensors (42, 44) zu dem Zeitpunkt definieren, zu dem die Sensordaten (71) erfasst wurden, wobei der Sensor eine Kamera (42) ist und die Sensordaten (71) Bilddaten (72) sind;
- Anzeigen eines oder mehrerer Bilder (6), die durch die Bilddaten (72) definiert sind, auf einer Anzeigevorrichtung (8);
- Anzeigen von mindestens zwei Bildern (6), die nach ihren zugehörigen Sensor-Positionsdaten (74) geordnet sind;
**dadurch gekennzeichnet, dass** der Schritt des
- Anzeigen von mindestens zwei Bildern (6), die nach ihren zugehörigen Sensorpositionsdaten (74) geordnet sind;
die folgenden Schritte umfasst
- Bestimmen einer Wahrscheinlichkeit des Auftretens von Fehlstellen (69) innerhalb von Bildern einer Folge von Bildern;
- automatisches Anzeigen der Bildsequenz;
- automatisches Ändern mindestens eines Parameters, der die Anzeige der Bildsequenz steuert, in Abhängigkeit von dieser Wahrscheinlichkeit.

2. Verfahren nach Anspruch 1, wobei der Schritt des
- Anzeigen von mindestens zwei Bildern (6), die entsprechend ihrer zugehörigen Sensor-Positionsdaten (74) geordnet sind;
mindestens einen der folgenden Schritte umfasst
- Anzeigen von mindestens zwei Bildern (6a, 6c) in einer horizontalen Reihe, wobei die relative Position der Bilder (6a, 6c) in der Reihe einer relativen horizontalen Position entspricht, die in den jeweiligen Sensorpositionsdaten (74) enthalten ist, die jedem Bild (6a, 6c) zugeordnet sind, wobei die Bilder (6a, 6c) in der gleichen horizontalen Reihe der gleichen vertikalen Position zugeordnet sind, die in den jeweiligen Sensorpositionsdaten (74) enthalten ist;
- Anzeigen von mindestens zwei Bildern (6a, 6b) in einer vertikalen Spalte, wobei die relative Position der Bilder (6a, 6b) in der Spalte einer relativen vertikalen Position entspricht, die in den jeweiligen Sensorpositionsdaten (74) enthalten ist, die jedem Bild (6a, 6b) zugeordnet sind; wobei die Bilder (6a, 6b) in der gleichen vertikalen Spalte der gleichen horizontalen Position zugeordnet sind, die in den jeweiligen Sensorpositionsdaten (74) enthalten ist.

3. Verfahren nach Anspruch 2, umfassend den Schritt des Anzeigens von mindestens zwei Bildern (6a, 6b) in einer vertikalen Spalte und des Scrollens der Spalte in vertikaler Richtung auf der Anzeigevorrichtung (8) entsprechend einer Benutzereingabe.

4. Verfahren nach Anspruch 3, umfassend die Schritte
- Anzeigen eines vergrößerten Ausschnitts (6d) eines ersten Bildes (6a) der mindestens zwei Bilder (6a, 6b) in der vertikalen Spalte, wobei der vergrößerte Ausschnitt (6d) einen Teil des ersten Bildes (6a) in einer horizontalen Position und mit einem Vergrößerungsgrad zeigt, und
- Scrollen des vergrößerten Abschnitts entsprechend einer Benutzereingabe,
- wodurch, wenn der vergrößerte Abschnitt (6d) eine obere oder untere Grenze des ersten Bildes (6a) erreicht, die Anzeige geändert wird, um einen vergrößerten Abschnitt (6d) eines benachbarten zweiten Bildes (6b) mit demselben Vergrößerungsgrad und an derselben horizontalen Position innerhalb des zweiten Bildes (6b) anzuzeigen.

5. Verfahren nach einem der Ansprüche 1 bis 3, umfassend die Schritte
- Eingeben einer Benutzerauswahl, die ein ausgewähltes lineares Merkmal der Klinge (3) angibt;
- Anzeigen eines vergrößerten Ausschnitts (6d) eines ersten Bildes (6a), der einen Teil des ausgewählten linearen Merkmals zeigt;
- Eingeben eines Bildlaufbefehls und als Reaktion auf den Bildlaufbefehl Bewegen des vergrößerten Ausschnitts (6d), um dem ausgewählten linearen Merkmal zu folgen.

6. Verfahren nach einem der Ansprüche 1 bis 5, wobei der Sensor eine Kamera (42) ist und die Sensordaten (71) Bilddaten (72) sind, und wobei der Schritt des
- Verarbeiten der Vielzahl von Sätzen von Sensordaten (71) in Kombination mit den Sensorpositionsdaten (74), wodurch eine integrierte Ansicht auf die Sätze der erweiterten Sensordaten (7) erzeugt wird
umfasst die folgenden Schritte
- Identifizieren von einer oder mehreren Fehlerstellen (69) auf dem Blatt (3) in Bildern (6), die durch die Bilddaten (72) dargestellt werden;
- automatisches Bestimmen, für jede der einen oder mehreren Abweichungen (69), einer Fehlerstelle (68), die einen Ort der Abweichung (69) auf der Schaufel (3) definiert;
- Speichern der Fehlerstelle (68) für jede der einen oder mehreren Abweichungen (69) als Teil der Fehlerstellendaten (64), die mit der Abweichung (69) verbunden sind.

7. Verfahren nach Anspruch 6, das die folgenden Schritte umfasst
- Präsentieren eines Bildes (6) für einen Benutzer;
- Eingeben einer Benutzereingabe, die ein Fehlerstellenbild (65) spezifiziert, das die Fehlerstelle (69) innerhalb des Bildes (6) zeigt, wobei die Benutzereingabe insbesondere eine Begrenzungslinie (66), insbesondere einen Begrenzungskasten, spezifiziert, die das Fehlerstellenbild (65) vom Rest des Bildes (6) abgrenzt;
- Speichern des Abweichungsbildes (65) als Teil der mit der Fehlerstelle (69) verbundenen Abweichungsdaten;
und optional mit den folgenden Schritten
- Berechnen der Fehlerstelle (68) auf der Schaufel durch Bestimmen, basierend auf der Begrenzungslinie (66), einer Stelle des Abweichungsbildes (65) innerhalb des Bildes (6) und Projizieren dieser Stelle auf ein Computermodell der Schaufel (3);
- Speichern der Fehlerstelle (68) als Teil der mit der Fehlerstelle (69) verbundenen Fehlerdaten.

8. Verfahren nach Anspruch 6, umfassend die folgenden Schritte
- Durchführen einer computerimplementierten Analyse eines Bildes (6), um ein oder mehrere Fehlerstellenbilder (65) zu identifizieren, die Fehlerstellen (69) innerhalb des Bildes (6) zeigen;
- Speichern des Abweichungsbildes (65) als Teil der mit der Fehlerstelle (69) verbundenen Abweichungsdaten;
und optional umfassend den Schritt des
- Berechnen der Fehlerstelle (68) auf der Schaufel durch automatisches Bestimmen einer Stelle des Abweichungsbildes (65) innerhalb des Bildes (6) und Projizieren dieser Stelle auf ein Computermodell der Schaufel (3);
- Speichern der Fehlerstelle (68) als Teil der Fehlerstellendaten, die mit der Fehlerstelle (69) verbunden sind.

9. Verfahren nach einem der Ansprüche 6 bis 8, das die folgenden Schritte umfasst
- automatisches oder manuelles Bestimmen, für jede der einen oder mehreren Fehlerstellen (69), einer Fehlerkategorisierung (67), die eine oder mehrere Eigenschaften der Fehlerstelle (69) definiert, mit mindestens einer der folgenden Eigenschaften
• einen Typ der Fehlerstelle (69),
• einen Schweregrad der Fehlerstelle (69),
• eine Handlungsempfehlung zur Behandlung der Fehlerstelle (69); und
- Speichern der Abweichungskategorisierung (67) als Teil der mit der Fehlerstelle (69) verbundenen Fehlerdaten.

10. Verfahren nach Anspruch 9, wobei das automatische Bestimmen der Fehlerkategorisierung (67) die Verwendung eines Klassifikationsverfahrens umfasst, das durch überwachtes maschinelles Lernen abgeleitet wird.

11. Verfahren nach einem der Ansprüche 6 bis 10, umfassend die folgenden Schritte
- für zwei oder mehr Sätze von Abweichungsdaten (64), die in verschiedenen Bildern identifizierte Fehlerstellen (69) darstellen, Vergleichen ihrer Fehlerstellen (68) auf der Schaufel (3), und,
- wenn die Orte gleich sind, Speichern einer Assoziation zwischen den beiden Sätzen von Abweichungsdaten (64), um die Tatsache darzustellen, dass sie sich auf dieselbe physikalische Fehlerstelle (69) beziehen.

12. Verfahren nach einem der Ansprüche 6 bis 11, umfassend den Schritt
- Ausgeben eines Berichts in menschenlesbarer Form, der mindestens eine Schaufel (3) oder den Satz von Schaufeln (3) einer Turbine (10) betrifft, wobei der Bericht Folgendes umfasst: eine Liste von Fehlerstellen (69), und für jede Fehlerstelle (69) mindestens
• ein Bild der Fehlerstelle (65),
• eine Fehlerkategorisierung (67) und eine
• Fehlerstelle (68), und
• optional mehr als ein Fehlerbild (65), wenn es mehr als ein Fehlerbild (65) für dieselbe physikalische Fehlerstelle (69) gibt.

13. Verfahren nach einem der Ansprüche 6 bis 11, das die folgenden Schritte umfasst
- Führen einer Datenbank, die für mindestens eine Schaufel (3) Fehlerstellendaten (64), insbesondere auch erweiterte Sensordaten (7), aus einer Vielzahl von Inspektionseinsätzen umfasst, wobei Assoziationen zwischen Sätzen von Fehlerstellendaten (64) aus verschiedenen Inspektionen vorhanden sind, die die Tatsache repräsentieren, dass sie sich auf dieselbe physikalische Fehlerstelle (69) beziehen, die zu verschiedenen Zeitpunkten beobachtet wurde;
- optionales Durchführen einer Analyse eines zeitlichen Verlaufs von Fehlem, die durch die Fehlerstellendaten (64) aus einer Vielzahl von Inspektionseinsätzen über eine Vielzahl von Turbinen (10) dargestellt werden, wodurch ein statistisches Modell des Fehlerverlaufs bestimmt wird, und Verwenden dieses statistischen Modells, um für eine ausgewählte Schaufel (3) den Fehlerverlauf vorherzusagen und optional Wartungsmaßnahmen an der Schaufel (3) zu planen.

14. Verfahren nach Anspruch 1, wobei ein oder mehrere Parameter, die die Anzeige der Bildsequenz steuern, aus dem Satz von:
- einer Änderungsrate bei der Anzeige der Bildsequenz;
- einer Vergrößerung der Bilder;
- eine Auswahl von Bildausschnitten.

15. Verfahren nach Anspruch 1 oder 14, das die folgenden Schritte umfasst.
- Akzeptieren einer Benutzereingabe;
- in Übereinstimmung mit der Benutzereingabe entweder das Anhalten, die Änderung der Änderungsgeschwindigkeit oder das Zurückspulen der Anzeige der Bildfolge.

16. Verfahren nach einem der Ansprüche 13 bis 15, wobei der Schritt des
- Bestimmen einer Wahrscheinlichkeit des Auftretens von Fehlerstellen (69) innerhalb von Bildern einer anzuzeigenden Bildsequenz;
die folgenden Schritte umfasst
- Eingeben eines Bildes und/oder von Positionsdaten, die mit dem Bild der Bildsequenz verbunden sind, in ein maschinelles Lernsystem, das darauf trainiert ist, ein Bild und/oder Positionsdaten, die mit dem Bild verbunden sind, mit einer Wahrscheinlichkeit des Auftretens von Fehlerstellen (69) innerhalb des Bildes zu assoziieren, und Abrufen der Wahrscheinlichkeit des Auftretens von Fehlerstellen (69) aus dem maschinellen Lernsystem.

## Revendications

1. Méthode d'analyse et d'affichage des données de capteur relatives à une éolienne, comprenant les étapes suivantes
- récupérer plusieurs ensembles de données de capteur augmentées (7), chacun comprenant des données de capteur (71) stockées en association avec des données de pose de capteur (74) qui définissent la pose d'un capteur (42, 44) au moment où les données de capteur (71) ont été acquises, le capteur étant une caméra (42) et les données de capteur (71) étant des données d'image (72) ;
- afficher, sur un dispositif d'affichage (8), une ou plusieurs images (6) définies par les données d'image (72) ;
- afficher au moins deux images (6) ordonnées en fonction des données de pose du capteur qui leur sont associées (74) ;
**caractérisé par le fait que** l'étape consistant à
- afficher au moins deux images (6) ordonnées en fonction des données de pose du capteur qui leur sont associées (74) ;
comprend les étapes suivantes
- déterminer une probabilité d'occurrence des défauts (69) dans les images d'une séquence d'images ;
- afficher automatiquement la séquence d'images
- modifier automatiquement, en fonction de cette probabilité, au moins un paramètre qui contrôle l'affichage de la séquence d'images.

2. Procédé selon la revendication 1, dans lequel l'étape consistant à
- afficher au moins deux images (6) ordonnées en fonction des données de pose du capteur (74) qui leur sont associées ;
comprend au moins l'une des étapes suivantes
- afficher au moins deux images (6a, 6c) dans une rangée horizontale, la position relative des images (6a, 6c) dans la rangée étant fonction d'une position horizontale relative comprise dans les données de pose du capteur (74) associées à chaque image (6a, 6c), les images (6a, 6c) dans la même rangée horizontale étant associées à la même position verticale comprise dans les données de pose du capteur (74) respectives ;
- afficher au moins deux images (6a, 6b) dans une colonne verticale, la position relative des images (6a, 6b) dans la colonne étant fonction d'une position verticale relative comprise dans les données de pose du capteur (74) associées à chaque image (6a, 6b) ; les images (6a, 6b) dans la même colonne verticale étant associées à la même position horizontale comprise dans les données de pose du capteur (74).

3. Le procédé de la revendication 2, comprenant l'étape consistant à afficher au moins deux images (6a, 6b) dans une colonne verticale et à faire défiler, en fonction d'une entrée de l'utilisateur, la colonne dans une direction verticale sur le dispositif d'affichage (8).

4. La méthode de la revendication 3, comprenant les étapes suivantes
- afficher une section agrandie (6d) d'une première image (6a) des au moins deux images (6a, 6b) dans la colonne verticale, la section agrandie (6d) montrant une partie de la première image (6a) à une position horizontale et avec un niveau d'agrandissement, et
- faire défiler, en fonction d'une entrée de l'utilisateur, la section agrandie,
- ainsi, lorsque la section agrandie (6d) atteint une limite supérieure ou inférieure de la première image (6a), changer l'affichage pour montrer une section agrandie (6d) d'une deuxième image adjacente (6b) avec le même niveau d'agrandissement et située à la même position horizontale à l'intérieur de la deuxième image (6b).

5. La méthode de l'une des revendications 1 à 3, comprenant les étapes suivantes
- saisie d'une sélection de l'utilisateur spécifiant une caractéristique linéaire sélectionnée de la lame (3) ;
- afficher une section agrandie (6d) d'une première image (6a) montrant une partie de la caractéristique linéaire sélectionnée ;
- saisie d'une commande de défilement et, en réponse à la commande de défilement, déplacement de la section agrandie (6d) pour suivre la caractéristique linéaire sélectionnée.

6. La méthode de l'une des revendications 1 à 5, dans laquelle le capteur est une caméra (42) et les données du capteur (71) sont des données d'image (72), et dans laquelle l'étape consistant à
- traiter la pluralité d'ensembles de données de capteur (71) en combinaison avec les données de pose de capteur (74), générant ainsi une vue intégrée sur les ensembles de données de capteur augmentées (7).
comprend les étapes suivantes
- identifier, dans les images (6) représentées par les données d'image (72), une ou plusieurs écarts (69) sur la lame (3) ;
- déterminer automatiquement, pour chacun des un ou plusieurs écarts (69), un emplacement d'écart (68) définissant une localisation de l'écart (69) sur la lame (3) ;
- stocker, pour chacun des un ou plusieurs défauts (69), la localisation du défaut (68) en tant que partie des données de défaut (64) associées au défaut (69).

7. La méthode de la revendication 6, comprenant les étapes suivantes
- présenter une image (6) à un utilisateur ;
- introduire une entrée utilisateur qui spécifie une image de déviation (65) qui montre la déviation (69) dans l'image (6), en particulier dans laquelle l'entrée utilisateur spécifie une ligne de délimitation (66), en particulier une boîte de délimitation, délimitant l'image de déviation (65) du reste de l'image (6) ;
- stocker l'image de déviation (65) en tant que partie des données de déviation associées à la déviation (69) ;
et comprenant éventuellement les étapes suivantes
- calculer l'emplacement du défaut (68) sur la lame en déterminant, sur la base de la ligne de délimitation (66), un emplacement de l'image du défaut (65) dans l'image (6) et en projetant cet emplacement sur un modèle informatique de la lame (3) ;
- en stockant l'emplacement de la déviation (68) en tant que partie des données de déviation associées à la déviation (69).

8. La méthode de la revendication 6, comprenant les étapes suivantes
- effectuer une analyse mise en oeuvre par ordinateur d'une image (6) pour identifier une ou plusieurs images de déviation (65) montrant des déviations (69) dans l'image (6) ;
- stocker l'image de déviation (65) en tant que partie des données de déviation associées à la déviation (69) ;
et comprenant éventuellement l'étape consistant à
- calculer l'emplacement du défaut (68) sur la lame en déterminant automatiquement un emplacement de l'image du défaut (65) dans l'image (6) et en projetant cet emplacement sur un modèle informatique de la lame (3) ;
- stocker l'emplacement de la déviation (68) en tant que partie des données de déviation associées à la déviation (69).

9. La méthode de l'une des revendications 6 à 8, comprenant les étapes suivantes
- déterminer automatiquement ou manuellement, pour chacun des un ou plusieurs défauts (69), une catégorisation de défaut (67) définissant une ou plusieurs propriétés du défaut (69), comprenant au moins l'un des éléments suivants
• un type de défaut (69),
• une gravité du défaut (69),
• une recommandation d'action pour traiter le défaut (69) ; et
- stocker la catégorisation de l'écart (67) en tant que partie des données d'écart associées à l'écart (69).

10. La méthode de la revendication 9, dans laquelle la détermination automatique de la catégorisation des défauts (67) comprend l'utilisation d'une méthode de classification dérivée de l'apprentissage automatique supervisé.

11. La méthode de l'une des revendications 6 à 10, comprenant les étapes suivantes
- pour deux ou plusieurs ensembles de données de déviation (64) représentant des déviations (69) identifiées dans des images différentes, comparer leurs emplacements de déviation (68) sur la lame (3), et,
- si les emplacements sont les mêmes, stocker une association entre les deux ensembles de données de déviation (64) pour représenter le fait qu'ils se rapportent au même défaut physique (69).

12. La méthode de l'une des revendications 6 à 11, comprenant l'étape consistant à
- produire, sous une forme lisible par l'homme, un rapport concernant au moins une pale (3) ou l'ensemble des pales (3) d'une turbine (10), le rapport comprenant : une liste de défauts (69), et pour chaque défaut (69) au moins
• une image de défaut (65),
• une catégorisation des défauts (67) et un
• un emplacement de défaut (68), et
• éventuellement plus d'une image de déviation (65) s'il existe plus d'une image de déviation (65) pour la même déviation physique (69).

13. La méthode de l'une des revendications 6 à 11, comprenant les étapes suivantes
- maintenir une base de données qui comprend, pour au moins une lame (3), des données d'écart (64), et en particulier aussi des données de capteur augmentées (7), provenant d'une pluralité de missions d'inspection, dans laquelle des associations entre des ensembles de données d'écart (64) provenant de différentes inspections sont présentes, représentant le fait qu'elles se rapportent au même défaut physique (69) observé à différents moments ;
- effectuer éventuellement une analyse d'une progression dans le temps des défauts représentés par les données de défaut (64) provenant d'une pluralité de missions d'inspection sur une pluralité de turbines (10), déterminant ainsi un modèle statistique de progression des défauts, et utiliser ce modèle statistique pour prédire, pour une pale sélectionnée (3), la progression des défauts et éventuellement planifier des actions de maintenance sur la pale (3).

14. Méthode de la revendication 1, dans laquelle un ou plusieurs paramètres qui contrôlent l'affichage de la séquence d'images font partie de l'ensemble suivant :
- une vitesse de changement dans l'affichage de la séquence d'images ;
- un agrandissement des images
- une sélection de sections d'images.

15. La méthode de la revendication 1 ou 14 comprenant les étapes suivantes.
- accepter une entrée de l'utilisateur ;
- en fonction de l'entrée de l'utilisateur, effectuer l'une des opérations suivantes : arrêter, modifier la vitesse de changement ou rembobiner l'affichage de la séquence d'images.

16. Le procédé de l'une des revendications 13 à 15, dans lequel l'étape consistant à
- déterminer une probabilité d'occurrences des défauts (69) dans les images d'une séquence d'images qui doivent être affichées ;
comprend les étapes suivantes
- introduire une image et/ou des données de position associées à l'image de la séquence d'images dans un système d'apprentissage automatique qui est entraîné à associer une image et/ou des données de position associées à l'image à une probabilité d'occurrences de défauts (69) dans l'image, et récupérer la probabilité d'occurrences de défauts (69) à partir du système d'apprentissage automatique.
